# EUROPÄISCHE PATENTANMELDUNG

(11) **EP 1 321 742 A2**
(43) Veröffentlichungstag der Anmeldung: **25.06.2003**
(21) Anmeldenummer: 02028206.7
(22) Anmeldetag: 14.12.2002
(51) Int. Cl.: G01C 21/32, G08G 1/0967, H04Q 7/38

(54) **Verfahren und Vorrichtung zur Erzeugung und Aktualisierung einer Wege- und/oder Wegezustandskarte**

(30) Priorität: 18.12.2001 DE 10162335
(71) Anmelder: ZF Lemförder Metallwaren AG, 49448 Lemförde (DE)
(72) Erfinder: Ersoy, Metin, Dr., 65396 Walluf (DE)

(57) **Zusammenfassung**

Die Erfindung betrifft eine Verfahren und eine Vorrichtung zur Erzeugung und Aktualisierung einer Wege- und/oder Wegezustandskarte unter Verwendung von, vorzugsweise dynamischen, Wegeinformationen und Informationen über den Zustand von Verkehrsmitteln, wobei am Verkehr teilnehmende Verkehrsmittel über ein drahtloses Telekommunikationsnetz positionsbezogene Informationen an mindestens einen zentralen Rechner übermitteln.

Die Erfindung zeichnet sich dadurch aus, dass eine Vielzahl von Verkehrsmitteln (1, 2) wetterrelevante Zustandsdaten (6) des Verkehrsmittels positionsbezogen an den mindestens einen zentralen Rechner (5) übermitteln und der mindestens eine zentrale Rechner (5) aufgrund der empfangenen Daten (6) ortsbezogen verkehrsrelevante Wetterzustände und/oder Wegezustände (7) bestimmt.

## Beschreibung

Die Erfindung betrifft ein Verfahren und eine Vorrichtung zur Erzeugung und Aktualisierung einer Wege- und/oder Wegezustandskarte unter Verwendung von, vorzugsweise dynamischen, Wegeinformationen und Informationen über den Zustand von Verkehrsmitteln, wobei am Verkehr teilnehmende Verkehrsmittel über ein drahtloses Telekommunikationsnetz positionsbezogene Informationen an mindestens einen zentralen Rechner übermitteln.

Für Straßenfahrzeuge ist ein solches Verfahren und eine solche Vorrichtung aus der Patentschrift DE 195 25 291 C1 bekannt. Diese Schrift offenbart ein Verfahren zur Aktualisierung von digitalen Straßenkarten, die insbesondere bei der Verkehrslenkung und Zielführung von Fahrzeugen Verwendung finden, wobei hierbei mindestens ein Probefahrzeug aktuelle Fahrtroutendaten ermittelt, speichert und zu gegebener Zeit an einen Verkehrsrechner überträgt. Der Verkehrsrechner wertet die erhaltenen Fahrtroutendaten aus und ermittelt Attribute, die den entsprechenden Straßenabschnitten zugeordnet werden, wobei die Attribute der entsprechenden Straßenabschnitte einer vorhandenen Straßenkarte anhand der Fahrtroutendaten aktualisiert werden und hierbei auch die Zulässigkeit des Befahrens der entsprechenden Straßenabschnitte erfasst wird.

Die Datenbasis, aus der die entsprechenden Attribute der Straßenabschnitte berechnet werden, umfasst lediglich Daten, die aus der Position beziehungsweise einer Positionsänderung des Fahrzeuges entstehen. Als zusätzlich zugängliche Informationen, werden lediglich am Straßenrand stehende Verkehrsschilder genannt, die optoelektronisch erfasst werden sollen.

Auch in der Offenlegungsschrift DE 197 42 414 A1 wird ein Verfahren und eine Vorrichtung zur Aktualisierung und/oder Ergänzung einer digitalen Straßenkarte eines Verkehrsnetzes vorgeschlagen, wobei auch hier über ein im Verkehr befindliches Straßenfahrzeug seine aktuellen Ortsinformationen an einen zentralen Rechner überträgt und der zentrale Rechner aus den empfangenen Bewegungsdaten der sich im Straßenverkehr bewegenden Fahrzeuges eine bereits im Rechner vorliegende digitale Straßenkarte mit neuen Straßen aktualisiert, falls Fahrzeuge dem zentralen Rechner bisher nicht bekannte Straßen befahren.

Aus einem Artikel des KFT-Technik Magazins mit dem Titel "BMW als Staumelder" ist weiterhin bekannt, dass die empfangenen Positions- und Fahrtdaten einer Vielzahl von Fahrzeugen per SMS an eine Zentrale übertragen werden können, aus der aufgrund der Bewegungsdaten der Fahrzeuge auf einen Stau geschlossen werden kann, so dass entsprechende Warnmeldungen über Radio zuverlässiger ausgegeben werden können.

Es ist Aufgabe der Erfindung ein verbessertes und erweitertes Verfahren zur Erzeugung und Aktualisierung einer Wege- und/oder Wegezustandskarte unter Verwendung von Wegeinformationen und Informationen über den Zustand von Verkehrsmitteln darzustellen.

Diese Aufgabe wird durch die Merkmale der unabhängigen Patentansprüche gelöst. Vorteilhafte Weiterbildungen der Erfindung sind Gegenstand untergeordneter Ansprüche.

Der Erfinder hat erkannt, dass aus den in einem Fahrzeug zur Verfügung stehenden Zustandsdaten wesentlich weitreichendere Informationen über die aktuelle Situation am Ort eines Verkehrsmittel ableitbar sind, wenn diese Daten in geeigneter Weise bezüglich ihrer direkten oder indirekten Korrelation zu verkehrsrelevanten Umgebungszuständen über einen zentralen Rechner ausgewertet werden.

In einem ersten Aspekt der Erfindung schlägt der Erfinder vor, das an sich bekannte Verfahren zur Erzeugung und Aktualisierung einer Wege- und/oder Wegezustandskarte unter Verwendung von, vorzugsweise dynamischen, Wegeinformationen und Informationen über den Zustand von Verkehrsmitteln zu verbessern, wobei in bekannter Weise die am Verkehr teilnehmende Verkehrsmittel über ein drahtloses Telekommunikationsnetz positionsbezogene Informationen an mindestens einen zentralen Rechner übermitteln. Erfindungsgemäß soll eine Vielzahl von Verkehrsmittel wetterrelevante Zustandsinformationen des Verkehrsmittels positionsbezogen an den mindestens einen zentralen Rechner übermitteln und der mindestens eine zentrale Rechner aufgrund der empfangenen Daten ortsbezogen verkehrsrelevante Wetterzustände und/oder Wegezustände ermitteln.

Zur Bestimmung der ortsbezogenen verkehrsrelevanten Wetterzustände und/oder Wegezustände können beispielsweise bekannte statistische Methoden verwendet werden, wobei es auch möglich ist, Korrelationsgrenzwerte - zwischen auftretenden Zustandsänderungen der erhaltenen Fahrzeugdaten und tatsächlichen Gegebenheiten - aufgrund vorheriger Gegenprüfungen zwischen den gesendeten Daten und tatsächlichen verkehrsrelevanten Wetterzuständen und/oder Wegezuständen zu ermitteln.

Alternativ hierzu besteht auch die Möglichkeit, zur Bestimmung der ortsbezogenen verkehrsrelevanten Wetterzustände und/oder Wegezustände neuronale Netze einzusetzen, wobei erfindungsgemäß solche neuronalen Netze über einen Zeitraum mit tatsächlichen ortsbezogenen verkehrsrelevanten Wetterzustände und/oder Wegezustände in an sich bekannter Weise trainiert werden können. Bezüglich neuronaler Netze wird beispielsweise auf die Software "BrainMaker" der Firma California Scientific Software und die Veröffentlichung "Introduction to Neuronal Networks", Jeannette Stanley, herausgegeben von California Scientific Software, verwiesen.

Als wetterrelevante Zustandsdaten des Verkehrsmittels können beispielsweise der, vorzugsweise mehrstufige, Schaltzustand eines Scheibenwischers oder die Daten eines Regensensors verwendet werden. Da das Einschalten eines Scheibenwischers, insbesondere, wenn mehrere Fahrzeuge dies gleichzeitig am gleichen Ort tun, mit dem Auftreten von Regen korreliert ist, kann, falls zeitkorreliert durch mehrere Verkehrsmittel in einer bestimmten Region die Scheibenwischer eingeschaltet werden und dieser Zustand an den zentralen Rechner gemeldet wird, dieser zentrale Rechner daraus schließen, dass in dieser Region zur Zeit Regen herrscht. Wird gleichzeitig auch noch Licht eingeschaltet, so kann darauf geschlossen werden, dass es relativ heftig regnet und die Sicht behindert ist.

Entsprechend kann auch der Schaltzustand der Nebelschlussleuchte oder des Nebelscheinwerfers übertragen werden, da durch diese auf eine starke Sichtbehinderung entweder durch Nebel, Schneetreiben oder ähnliche Wetterzustände geschlossen werden kann.

Außerdem können Informationen aus der Antriebssteuerung, wie beispielsweise ein gemessener Schlupf an Antriebsrädern an den zentralen Rechner gemeldet werden, so dass dieser hieraus auf den Zustand des Fahrtuntergrundes schließen kann. Selbstverständlich besteht auch die Möglichkeit, die Temperaturinformation von Temperatursensoren, die in den meisten Fahrzeugen heute zur Standardausrüstung gehören, zu übertragen, so dass eine sehr genaue Temperaturinformation über die Verkehrsgebiete erstellt werden kann.

In diesem Zusammenhang ist darauf hinzuweisen, dass es besonders durch den Einsatz neuronaler Netze möglich ist, relativ komplexe Zusammenhänge von Zustandsinformationen, die von Verkehrsmitteln übertragen werden, einfach zu verarbeiten und Schlüsse mit hoher Sicherheit auf die tatsächlichen Umweltzustände zu ermöglichen.

Zusätzlich können auch Informationen über die Geschwindigkeit, den Schaltzustand, den Lastzustand oder Abstand, beispielsweise Abstandsmessungen, zu vorausfahrenden oder nachfolgenden Verkehrsmitteln übermittelt und verwertet werden, so dass sich ein sehr genaues Bild über die Verkehrssituation der betrachteten Verkehrsabschnitte darstellen lässt.

Als Verkehrsmittel kommt beispielsweise ein Straßenfahrzeug in Betracht, insbesondere ein PKW oder ein LKW, wobei als Wegekarte eine Straßenkarte und als Wegezustandskarte eine Straßenzustandskarte verwendet wird.

Betrachtet man hingegen als Verkehrsmittel ein Schienenfahrzeug, so kann als Wegekarte eine Schienennetzkarte und als Wegezustandskarte eine Schienennetzzustandskarte verwendet werden.

Neben derartigen Landfahrzeugen können beispielsweise auch Wege- und Wegezustandskarten für Wasserfahrzeug erstellt werden, insbesondere für Binnen- oder Seeschiffe. Für diesen Verkehrsbereich ist es dann zweckmäßig andere Informationen für die Aktualisierung zu verwenden. Die Wegekarte, die in diesem Falle eine Binnen- oder Seeschiff-Fahrtskarte ist, und eine Wegezustandskarte, die eine Zustandskarte der Binnenoder Seeschiff-Fahrtswege darstellt, liefern dann aktuelle Informationen über das aktuelle Schifffahrtsstraßennetz und deren Zustand. Sinnvollerweise sollten hier beispielsweise die über ein Echolot gemessenen Tiefen der befahrenen Wege, Strömungszustände, die in der Regel an Bord über Log-Informationen und Fahrtrichtungsinformationen errechnet werden, übertragen werden. Ebenso können die an Bord eines Schiffes in der Regel zur Verfügung stehenden Windrichtungs- und Windstärkeninformationen übermittelt werden. Zusätzlich kann über Lageinformationen auf den Schiffen in Korrelation mit der Größe der Schiffe auch zuverlässige Informationen über den vorhandenen Wellengang erschlossen werden.

Außerdem besteht die Möglichkeit, als Verkehrsmittel ein Luftfahrzeug, insbesondere ein Flugzeug, zu verwenden, wobei die Wegekarte eine Luftverkehrskarte und die Wegezustandskarte eine Luftverkehrsroutenkarte mit relevanten Zustandsinformationen darstellen.

Derartige Luftverkehrskarten sind in der Regel dreidimensional aufgebaut, da sich das Luftfahrzeug dreidimensional im Raum bewegt. Auch solche Luftfahrzeuge verfügen über eine große Anzahl von Sensoren, mit denen sich beispielsweise Temperaturen, Luftströmungen, Informationen über Vereisungszustände, Clear Air Turbulenzen, Wolkenober- und -untergrenzen, Sichtweiten und ähnliche luftfahrtrelevanten Zustandsinformationen der Luftverkehrsrouten ermitteln lassen.

Werden die im Verkehrsmittel vorhandenen Informationen nicht unmittelbar und zeitnah übermittelt, so kann es vorteilhaft sein, zusätzlich zu den zu übertragenden Informationen auch eine Zeitinformation zu übertragen, die den Zeitpunkt der Ermittlung der Information beschreibt. Meist wird jedoch in dem erfindungsgemäßen System eine umnittelbare Übertragung von Informationen notwendig sein.

Zur Ortsbestimmung des Verkehrsmittels können beispielsweise Informationen bezüglich der Funkzellen des Telekommunikationssystems, vorzugsweise in Verbindung mit weiteren im Fahrzeug vorliegenden Daten zu Geschwindigkeits- und Lenkzuständen, vorgesehen werden. Für eine genauere Ortsbestimmung können Inertialsysteme, Global Positioning Systeme (GPS) verwendet werden. Für eine besonders genaue Ortsbestimmung in den Verkehrsmitteln können auch die aufwendigeren Differential Global Positioning Systeme (DGPS) verwendet werden, wobei diese jedoch einen relativ hohen Infrastrukturaufwand benötigen.

Eine andere Möglichkeit zur Verbesserung einer einfachen GPS-Ortsbestimmung kann dadurch erreicht werden, dass das betrachtete Gebiet, in dem sich die Verkehrsmittel bewegen, flächendeckend mit mehreren GPS-Referenzstationen ausgestattet wird, die ihre Ortskorrekturvektoren direkt an den zentralen Rechner übertragen, so dass dieser Rechner die an ihn übertragenen Ortsdaten aus den Verkehrsmitteln entsprechend korrigiert. Beispielsweise können Referenzstationen im Abstand von ca. 250km installiert werden, so dass sich daraus unter Zugrundelegung der derzeitigen Verhältnisse korrigierte Ortsbestimmungen mit einem Fehlerkreisradius von weniger als 15m ergibt. Dieser auftretende Fehler lässt sich weiter reduzieren, wenn die Dichte der Referenzstationen erhöht wird. Im Ergebnis ist hierdurch also eine kostengünstige Möglichkeit eröffnet die Genauigkeit einer GPS-Ortsbestimmung zu erhöhen, ohne in den Verkehrsmitteln selbst zusätzliche Maßnahmen wie eigene DGPS-Empfänger zu installieren.

Zur Übertragung der Daten, von mindestens einem Fahrzeug zum zentralen Rechner, schlägt der Erfinder beispielsweise das UMTS (UMTS = Universal Mobile Telekommunikation System) oder ein satellitengestütztes Telekommunikationssystem vor. Wird das UMTS verwendet, so ist es sehr einfach möglich, erhebliche Datenmengen in kurzer Zeit zu übertragen. Bekannter Weise werden beim UMTS die zu übertragenden Daten paketweise zusammengefasst und mit hoher Datendichte in sogenannten Frames übertragen. Bei satellitengestützten Telekommunikationssystemen fällt allerdings die Bindung an eine notwendige erdgebundene Infrastruktur weg, so dass sogar sehr dünn besiedelte Gebiete oder auch offene Meere abgedeckt werden können.

Der Erfinder schlägt weiterhin vor, dass von dem mindestens einen zentralen Rechner die ermittelten Informationen zumindest teilweise, und vorzugsweise ortsbezogen, an die am Verkehr teilnehmenden Verkehrsmittel übertragen werden. Hierdurch wird es in Zukunft möglich, auf die in den Fahrzeugen noch üblichen CD-Roms zu verzichten, die in der Regel keine aktualisierten Versionen des Verkehrsnetzes aufweisen. Das Fahrzeug kann die jeweils notwendigen Straßeninformationen ortsbezogen vom zentralen Rechner abrufen und verfügt auf diese Weise ständig über den aktuellsten Stand des Verkehrsnetzes.

Ebenso können an das Verkehrsmittel die dem zentralen Rechner zur Verfügung stehenden Wegezustandsinformationen übertragen werden, die auf das Ziel oder die Route des Verkehrsmittels abgestimmt sind. Insgesamt wird es hierdurch möglich, mit relativ geringer Speicherkapazität in den Verkehrsmitteln selbst auszukommen, da die jeweils aktuellen Informationen in unmittelbarer Nähe des Fahrzeuges beziehungsweise, die für die vorgesehene Route notwendigen Informationen individuell und stets aktualisiert von einem zentralen Rechner auf das Fahrzeug übertragen werden, so dass kein unnötiger Speicherballast für das Fahrzeug notwendig ist.

Ergänzend ist noch darauf hinzuweisen, dass auch eine Vermischung der einzelnen Arten von Verkehrsmitteln möglich ist, wodurch sich weitere Anwendungsmöglichkeiten aufgrund der Kombination der Verkehrsmittel eröffnen. Beispielsweise kann die Information aus dem Schienenverkehr bei einem, die Schienen kreuzenden Fahrzeug dazu genutzt werden, Warnhinweise für einen sich nähernden Zug zu erzeugen.

Gemäß einem weiteren Aspekt des geschilderten Verfahrens schlägt der Erfinder auch vor, zur Positionsdefinition eines Verkehrsmittels Positionszellen zu verwenden, die sich lücken- und überlappungsfrei an benachbarte Positionszellen anschließen. Solche Positionszellen können wabenförmig, vorzugsweise in Sechseckform, vorzugsweise die Form von gleichseitigen Sechsecken, aufweisen.

Im Fall sechseckiger Waben, hat jede Wabe 6 unmittelbar und 6 mittelbar benachbarte Waben. Hieraus ergeben sich 12 Strahlen mit 30 Grad Winkelabständen vom Mittelpunkt der zentralen Wabe zu den Mittelpunkten der 12 benachbarten Waben. Betrachtet man den Verlauf von Straßen, die je nach ihrer Art eine bestimmte Mindestkrümmung nicht überschreiten, so kommen beim Wechsel von einer Wabe zur anderen Wabe auf allgemeinen Straßen nur 5 von diesen 12 Waben in Frage, auf den Autobahnen, die größere Krümmungen haben, sind sogar nur 3 von 12 relevant. Vorteilhaft kann der Wabenradius etwas kleiner als der Fehlerkreisradius des Navigationssystems, z.B. Wabenradius ca. 5m bei einem Fehlerkreisradius ca. 15m, gewählt werden. Hierdurch kann sich der "Zahlen"-Aufwand bei der Positionsangabe reduzieren, so dass einerseits die zu übertragenden Daten reduziert werden und andererseits die Zugehörigkeit der Positionsangabe zu einer Wegstrecke vereinfacht wird. Dieser o.g. 5m-Radius entspricht etwa der Breite einer zweispurigen Straße, wodurch sichergestellt ist, dass eine Wabe - mit Ausnahme von Kreuzungen - nie zu zwei Straßen gleichzeitig zugeordnet werden kann. Entsprechendes lässt sich natürlich auch auf andere Verkehrsmittel und ihre Verkehrswege übertragen.

Ein weiterer Aspekt der Erfindung sieht vor, dass mindestens ein Verkehrsmittel wartungsbezogene Zustandsinformationen über im Verkehrsmittel befindliche Bauteile übermittelt. Solche Zustandsinformationen können beispielsweise vom zentralen Rechner an eine Service-Station übermittelt werden, wobei die Service-Station ein Hersteller des Verkehrsmittels oder ein zuvor benannter Wartungsbetrieb oder ein Pannendienst sein kann. Dieser Service ist besonders wertvoll für gewerblich genutzte Verkehrsmittel wie Nutzfahrzeuge, denn damit können die Stillstand- und Ausfallzeiten dieser Fahrzeuge drastisch reduziert werden. Auch die Hersteller von Fahrzeugaggregaten, wie z.B. Getriebe oder Motor oder Bremssystem, können diese Informationen nutzen um ihren Service gezielt anbieten. Außerdem können die Hersteller hierdurch auch wertvolle Feld-Informationen über ihre Produkte erhalten.

Des Weiteren kann der mindestens eine zentrale Rechner bei Auftreten vorbestimmter, vorzugsweise ortsbezogener, Umstände Einfluss auf das Verkehrsmittel ausüben, vorzugsweise den Geschwindigkeitsvektor des Verkehrsmittels aktiv verändern. Dies bedeutet, dass beispielsweise bei einem PKW der sich auf ein Gebiet mit Eisglätte zu bewegt und eine überhöhte Geschwindigkeit aufweist, diese Geschwindigkeit reduziert werden kann, so dass ein Abkommen von der Fahrbahn, insbesondere wenn in diesem Bereich eine Kurve vorliegt, verhindert werden kann. Entsprechend kann auch auf auftretende Sichtbehinderungen durch Nebelbänke oder Regen reagiert werden. Möglich ist es hierbei auch, wenn entsprechend genaue Positionsbestimmungen vorgenommen werden, Fahrzeugen das Einfahren auf Autobahnen in der falschen Verkehrsrichtung zu verhindern und somit die sogenannten "Geisterfahrten" auszuschließen.

Mit dieser Erfindung ist es auch möglich, ständig den aktuellen Verkehrsstrom bezüglich Dichte und Geschwindigkeit zu ermitteln, hieraus Informationen für eine zentrale Verkehrsführung und Verkehrsleitungsmaßnahmen zu gewinnen oder auch bei Staugefahr die Verkehrsteilnehmer rechtzeitig zu warnen und/oder auf alternative Verkehrswege umzuleiten oder zumindest Ausweichrouten vorzuschlagen.

Betrachtet man diese Situation übertragen auf den Schiffverkehr, so können durch eine derartige Einflussnahme und Information über die sonstigen am Schiffverkehr teilnehmenden Schiffe rechtzeitig Maßnahmen eingeleitet werden, die Kollisionen von Schiffen untereinander oder das Aufgrundlaufen von Schiffen verhindert werden. Entsprechendes lässt sich ebenso auf den Schienenverkehr und den Luftverkehr übertragen.

Gemäß einem weiteren Aspekt der Erfindung wird auch vorgeschlagen, die Aktualisierung der Wege- und/oder Wegezustandskarte mit einem Speicher ohne ursprüngliche Einträge zu beginnen und ausschließlich auf Basis der empfangenen Bewegungs- und Zustandsinformationen der Verkehrsmittel die Karte in digitalisierter Form aufzubauen. Hierdurch wird es weltweit möglich, ein globales Wegenetz zu erzeugen, ohne dass vorherige Grundinformationen oder Grundkarten notwendig wären, wobei jedem Teilnehmer an diesem System die jeweils aktuellen Informationen der Umgebung in der er sich bewegt zur Verfügung stehen können.

Um ein derartiges System wirtschaftlich zu betreiben, kann es hierbei vorteilhaft sein, wenn zum Verkehrsmittel übertragene Wege- und/oder Wegezustands-Information mittelbar oder unmittelbar eine geldwerte Belastung eines Kontos des Fahrers der Halters oder Besitzers des Verkehrsmittels bewirkt.

Die Kontendaten können jeweils durch die Kenndaten einer Telekommunikationszugangskarte mittelbar oder unmittelbar übertragen werden. Es kann aber auch eine Abbuchung durch das Einlesen einer Geldkarte bewirkt werden. Außerdem besteht auch die Option, alle unmittelbar das Verkehrsmittel betreffende Ausgaben, wie Tankkosten, Reparaturen, Mautgebühren, Airway-Gebühren, Landegebühren oder Verkehrsan- und -abfluggebühren, auf diese Weise zu begleichen. Wird beispielsweise auch noch der aktuelle Ladezustand z.B. eines LKW's an den zentralen Rechner übertragen, so können entfernungs- und lastbezogene Autobahn- oder Straßengebühren automatisch abgerechnet werden.

Selbstverständlich beinhaltet die Erfindung auch ein Verkehrs- und Wegezustandsinformationssystem mit mindestens einem Rechner zur Programm- und Datenspeicherung, der über ein Telekommunikationsnetz mit einer Vielzahl von aktiv am Verkehr beteiligten Verkehrsmitteln verbunden ist, wobei Mittel, vorzugsweise Programm-Mittel, vorgesehen sind, welche die oben geschilderten Verfahren ausführen.

Die Erfindung wird nun an Hand der nachstehenden Figuren näher beschrieben. Es stellen im einzelnen dar:
- Figur 1:: Beispiel der Ermittlung und Übertragung von verkehrsrelevanten Wetter und Wegezustandsinformationen;
- Figur 2:: Beispiel eines Service-Systems durch Übermittlung von Zustandsinformationen der Verkehrsmittel;
- Figur 3:: Wegekartierung durch Wabenstruktur;
- Figur 4:: Fahrzeugbeeinflussung durch vorausschauende Wege- und Wegezustandsermittlung.

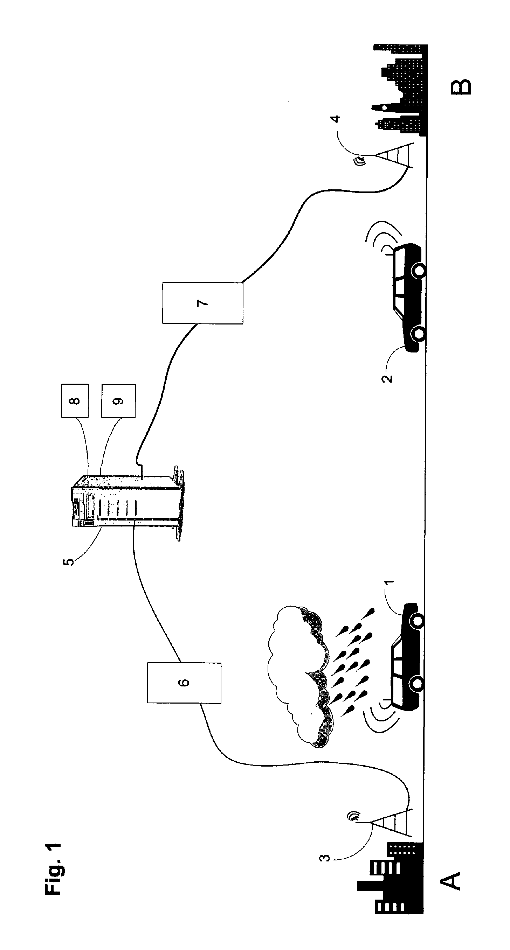

Die Figur 1 zeigt einen Aspekt des erfindungsgemäßen Verfahrens zur Erzeugung und Aktualisierung einer Wege- und Wegezustandskarte. Hierbei sind beispielhaft für die herrschenden Verkehrsströme zwei Fahrzeuge 1 und 2 gezeigt. Das Fahrzeug 1 fährt von der Stadt A zur Stadt B, während sich das Fahrzeug 2 auf Gegenkurs von der Stadt B zur Stadt A bewegt. Beide Fahrzeuge verfügen über UMTS-Sender/Empfänger, mit denen sie über die Antennen 3 beziehungsweise 4 mit einem zentralen Rechner 5 in Verbindung stehen. Über diese Verbindung übermittelt das Fahrzeug 1 Datensätze 6 an den Rechner 5, in denen wetterrelevante Zustandsdaten des Fahrzeuges 1 enthalten sind. Im vorliegenden Beispiel übermittelt das Fahrzeug 1, da es sich gerade durch ein Regengebiet bewegt, die Information des Schalterzustandes des Scheibenwischers an den Rechner 5.

Da neben dem Fahrzeug 1 auch noch viele weitere Fahrzeuge auf gleicher Weise in Verbindung mit dem Rechner 5 stehen, erhält der Rechner 5 von einer Vielzahl von Fahrzeugen die Information, dass in diesem Gebiet beziehungsweise Straßenabschnitt alle Fahrzeuge ihre Scheibenwischer einschalten. Da gleichzeitig die Temperaturinformation, die ebenfalls von diesen oder anderen Fahrzeugen dem Rechner 5 übertragen werden, besagt, dass sich die Ortstemperatur ausreichend über dem Gefrierpunkt befindet, außerdem die Fahrzeuge bei nicht zu hoher Geschwindigkeit keinen Schlupf an den Antriebsrädern melden, kann darauf geschlossen werden, dass in diesem Gebiet Regen herrscht.

Erfindungsgemäß kann eine derartige Schlussfolgerung entweder durch statistische Berechnungen erfolgen, in denen feste Vorgaben bezüglich der Beziehungen von bestimmten Zustandsdaten der Verkehrsmittel und Wetterzuständen korreliert werden. Hierbei können auch komplexere Zustände verwertet werden, wie beispielsweise die Information eines eingeschalteten Scheibenwischers in Verbindung mit Temperaturen unter dem Gefrierpunkt bei gleichzeitiger Meldung von starkem Schlupf an Antriebsrädern von Fahrzeugen die sich in dieser Gegend bewegen auf Glatteis beziehungsweise Schnee schließen lassen. Liegt andererseits lediglich die Information vom starken Schlupf bei niedrigen Temperaturen, jedoch nicht eingeschalteten Scheibenwischer vor, so kann daraus geschlossen werden, dass eine glatte Fahrbahndecke existiert, jedoch kein Regen und Schnee fällt.

Anstelle der statistischen Ermittlungen, die entsprechende, vorher festgelegt Korrelationen zwischen Zustandsdaten der Verkehrsmittel und den daraus zu schließenden Wetterzuständen beziehungsweise Wegezuständen erfordern, kann auch ein neuronales Netzwerk verwendet werden, welches durch einfache Trainingsläufe, bei denen dem neuronalen Netzwerk sowohl die aktuell gesendeten Zustandsdaten von Fahrzeugen und die tatsächlich vorhandenen Wetterzustände beziehungsweise Wegezustände gemeldet werden, so dass so ein neuronales Netz anschließend alleine aus den gemeldeten Zustandsdaten der Verkehrsmittel auf die tatsächlichen Wetter- beziehungsweise Wegeverhältnisse schließen kann.

Liegen dem Rechner 5 nun die entsprechenden Wege- beziehungsweise Wetterzustände vor, so kann er diese Informationen 7 wiederum über die Telekommunikationsverbindungen mit den Fahrzeugen, hier zum Beispiel mit dem Fahrzeug 2, welches sich in das Regengebiet bewegt, übertragen und dem Fahrer des Fahrzeuges 2 beispielsweise anzeigen, dass er in Kürze in ein Regengebiet einfährt, damit dieser sein Fahrverhalten entsprechend anpassen kann.

Erfindungsgemäß kann jedoch zusätzlich zu der reinen Informationsübertragung auch die Möglichkeit geschaffen werden, auf das entsprechende Verkehrsmittel, hier das Fahrzeug 2, über den Rechner 5 einzuwirken. Hierdurch kann beispielsweise das Fahrzeug 2 abgebremst werden, falls dem Rechner die Information vorliegt, dass das Fahrzeug 2 sich zum Beispiel in ein Gebiet mit starkem Aquaplaning hineinbewegt und die Geschwindigkeit des Fahrzeuges 2 zu einer Verkehrsgefährdung führen würde.

Die oben genannten Zustandsdaten, wie Schalterstellung des Scheibenwischers, Temperatursensor und Schlupf werden hier nur beispielhaft genannt. Im Falle einer Auswertung durch ein neuronales Netz müssen die ursächlichen Zusammenhänge nicht unbedingt bekannt sein.

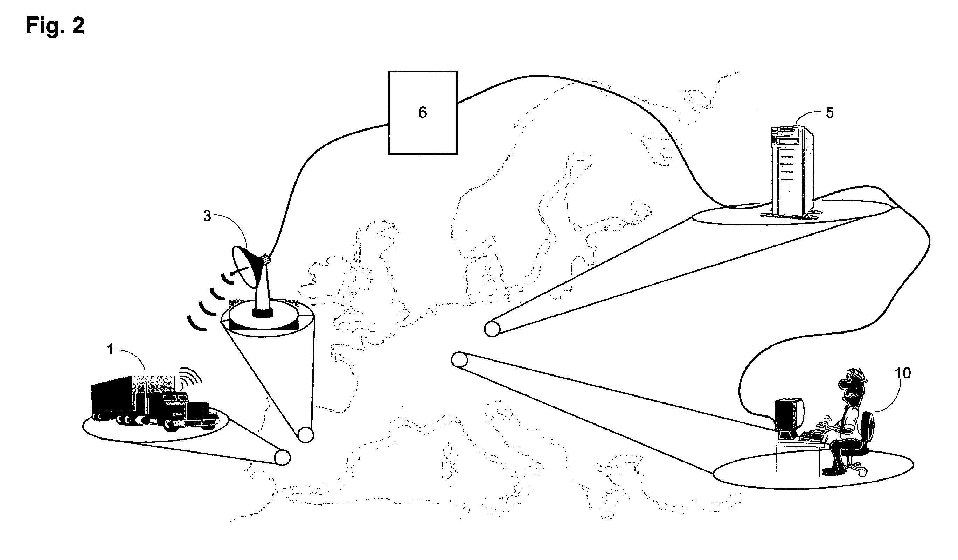

Ein anderer Aspekt der Erfindung ist in der Figur 2 dargestellt. Diese Figur 2 zeigt beispielhaft eine Europakarte im Hintergrund, auf der sich ein Fahrzeug 1 in Spanien bewegt. Dieses Fahrzeug 1 ist über die Antenne 3 mit einem zentralen Rechner 5 verbunden und meldet entsprechend dem erfindungsgemäßen Gedanken die Zustandsinformationen 6 an den zentralen Rechner 5. Befinden sich in diesen Zustandsinformationen 6 nicht nur wege- und wetterrelevante Daten, sondern auch Daten, die dem Abnutzungs- oder Betriebszustand einzelner Fahrzeugelemente enthalten, so kann der Rechner 5, der mit einer Serviceeinheit 10 in Verbindung steht, beispielsweise die sich abzeichnende Abnutzung von Bremsbelägen oder anderen Verschleißteilen oder sonstigen für den Betrieb wesentlichen Fahrzeugteilen melden. Hierdurch kann die Servicestation 10 dafür Sorge tragen, dass entsprechende Ersatzteile an einer vom Fahrzeug 1 als nächstes angefahrenen Servicestation vorrätig ist, so dass eine sehr zügige Wartung dieses Fahrzeuges ermöglicht wird und unnötige Stillstandszeiten durch das Warten auf Ersatzteile erspart bleiben.

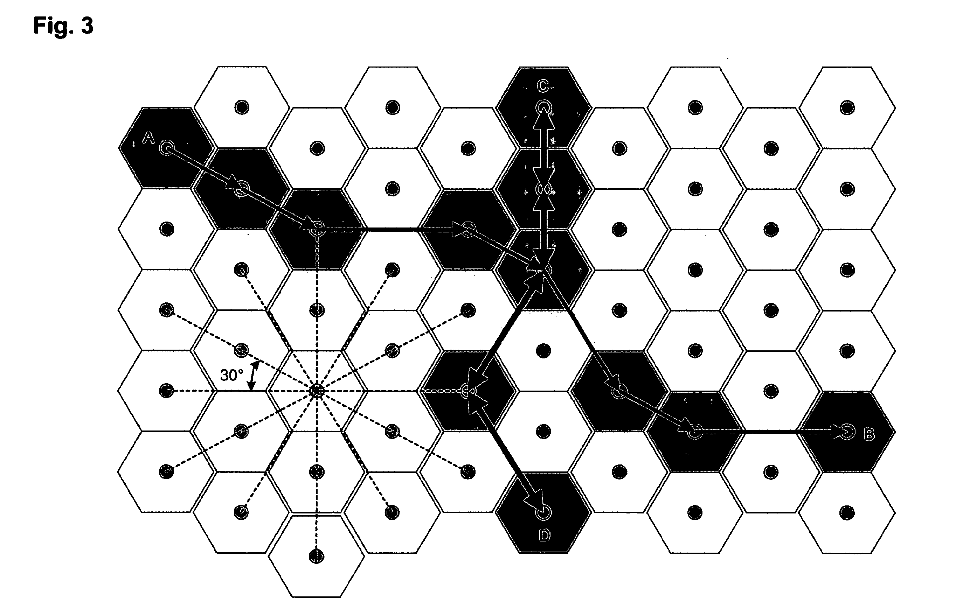

Ein anderer Aspekt der Erfindung ist in der Figur 3 dargestellt. Diese Figur verdeutlicht die Kartierung des Wegenetzes mit Hilfe einer Wabenstruktur. Die Wabenstruktur ist aus einer

Vielzahl von sechseckigen Waben mit gleicher Schenkellänge aufgebaut. Jede einzelne Wabe verfügt über sechs unmittelbare Nachbarn und zwölf mittelbare Nachbarn. Die Ortsbestimmung eines Fahrzeuges wird hierbei durch die Definition der einzelnen Waben vorgenommen, wobei die Durchmesser einer Wabe kleiner als der Fehlerkreisradius der direkten Ortsbestimmung im Fahrzeug sein soll. Verbindet man den Mittelpunkt der einzelnen Wabe mit dem Weg zum Mittelpunkt einer direkt benachbarten beziehungsweise einer mittelbar benachbarten Wabe, so ergibt sich eine Richtungsrasterung mit 30° Winkelabständen, so dass eine eindeutige Zuordnung des Fahrzeuges bei seiner Bewegung über eine Strecke genauer vorgenommen werden kann. Hierdurch wird eine Erhöhung der Positionierungsgenauigkeit des Fahrzeuges erreicht.

In der gezeigten Figur 3 sind beispielhaft die Wege von A nach B und von C nach D dargestellt, wobei die hier verwendeten Wabenelemente dunkel hinterlegt sind und eine eindeutige Zuordnung zu den einzelnen Wegen aufweisen, mit Ausnahme der Wabe im Kreuzungspunkt zwischen den Wegen AB und CD.

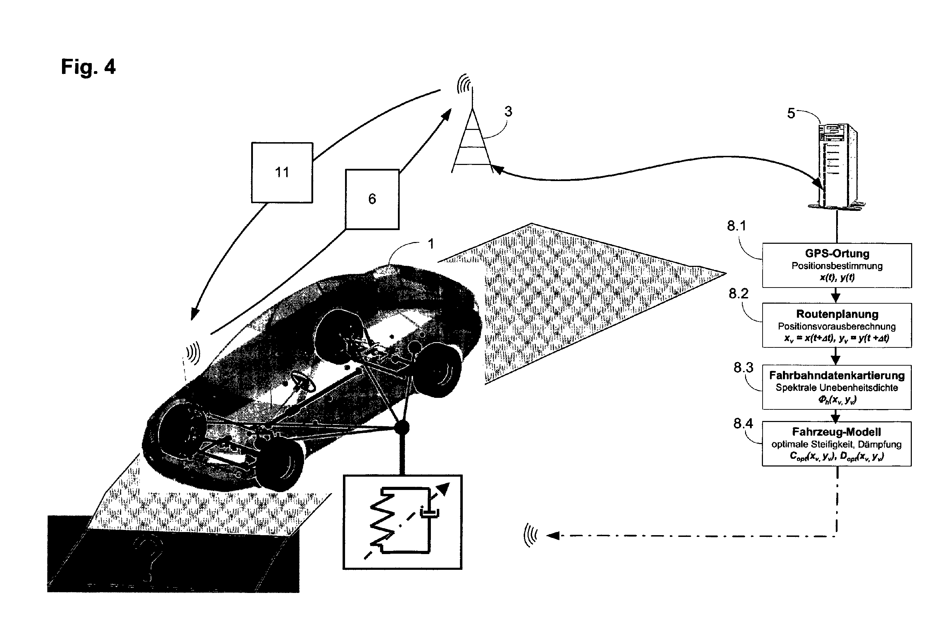

Die Figur 4 verdeutlicht die Einflussnahme des zentralen Rechners 5 auf ein Fahrzeug 1 aufgrund ermittelter Wetter- und Wegezustände. Das Fahrzeug 1 verfügt über eine Vielzahl von Sensoren, durch welche Zustandsinformationen 6 drahtlos an einen zentralen Rechner 5 gemeldet werden können. Der zentrale Rechner 5 verfügt über eine detaillierte Wege- und Wegezustandskarte. Anhand der übermittelten Daten des Fahrzeuges 1 kann der Rechner 5 in einem ersten Schritt 8.1 zunächst die genaue Ortsbestimmung des Fahrzeuges 1 vornehmen und aufgrund der Kenntnis des Wegeplans und gegebenenfalls des mitgeteilten Zieles eine Positionsvorausberechnung im Schritt 8.2 durchführen, durch die dem Rechner bekannten Zustände des Verkehrsmittels die im Schritt 8.3 mit den zu erwartenden Bewegungen des Fahrzeuges korreliert werden, kann der Rechner im Schritt 8.4 die notwendigen Beeinflussungen am Fahrzeug, wie beispielsweise ein optimale Steifung, eine Dämpfung oder ein erzwungenes Bremsverhalten oder ähnliches vorberechnen. Diese gegebenenfalls notwendigen Stellsignale 11 an das Fahrzeug werden vom Rechner wiederum drahtlos über die Antenne 3 an das Fahrzeug 1 weitergeleitet, so dass eine sichere Führung des Fahrzeuges 1 ermöglicht wird.

Die in den Figuren 1 bis 4 dargestellten Situationen für Straßenfahrzeuge lassen sich sinnentsprechend auch auf Schienenwege und Schienenfahrzeuge, Schifffahrtswege und Schiffe und auch Luftverkehrswege und Flugzeuge übertragen.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

### Bezugszeichenliste:

- 1: Fahrzeug
- 2: Fahrzeug
- 3: Antenne
- 4: Antenne
- 5: zentraler Rechner
- 6: Datensätze / Zustandsinformationen
- 7: Informationen
- 8: Programm
- 8.1: Programmschritt
- 8.2: Programmschritt
- 8.3: Programmschritt
- 8.4: Progammschritt
- 10: Serviceeinheit
- 11: Stellsignale

## Patentansprüche

1. Verfahren zur Erzeugung und Aktualisierung einer Wege- und/oder Wegezustandskarte unter Verwendung von, vorzugsweise dynamischen, Wegeinformationen und Informationen über den Zustand von Verkehrsmitteln, wobei am Verkehr teilnehmende Verkehrsmittel über ein drahtloses Telekommunikationsnetz positionsbezogene Informationen an mindestens einen zentralen Rechner übermitteln,
**dadurch gekennzeichnet, dass** eine Vielzahl von Verkehrsmitteln (1, 2) wetterrelevante Zustandsdaten (6) des Verkehrsmittels positionsbezogen an den mindestens einen zentralen Rechner (5) übermitteln und der mindestens eine zentrale Rechner (5) aufgrund der empfangenen Daten (6) ortsbezogen verkehrsrelevante Wetterzustände und/oder Wegezustände (7) bestimmt.

2. Verfahren gemäß dem voranstehenden Patentanspruch 1,
**dadurch gekennzeichnet, dass** zur Bestimmung der ortsbezogenen verkehrsrelevanten Wetterzustände und/oder Wegezustände (7) statistische Methoden verwendet werden.

3. Verfahren gemäß dem voranstehenden Patentanspruch 2,
**dadurch gekennzeichnet, dass** Korrelationsgrenzwerte aufgrund vorheriger Gegenprüfungen zwischen den gesendeten Daten und tatsächlichen verkehrsrelevanten Wetterzuständen und/oder Wegezuständen ermittelt werden.

4. Verfahren gemäß einem der voranstehenden Patentansprüche 1 bis 3,
**dadurch gekennzeichnet, dass** zur Bestimmung der ortsbezogenen verkehrsrelevanten Wetterzustände und/oder Wegezustände (7) neuronale Netze verwendet werden.

5. Verfahren gemäß dem voranstehenden Patentanspruch 4,
**dadurch gekennzeichnet, dass** das neuronale Netz über einen Zeitraum mit tatsächlichen ortsbezogenen verkehrsrelevanten Wetterzuständen und/oder Wegezuständen trainiert wird.

6. Verfahren gemäß einem der voranstehenden Patentansprüche 1 bis 5,
**dadurch gekennzeichnet, dass** als wetterrelevante Zustandsdaten (6) des Verkehrsmittels der, vorzugsweise mehrstufige, Schaltzustand des Scheibenwischers und/oder die Daten eines Regensensors verwendet wird.

7. Verfahren gemäß einem der voranstehenden Patentansprüche 1 bis 6,
**dadurch gekennzeichnet, dass** als wetterrelevante Zustandsdaten (6) des Verkehrsmittels der Schaltzustand der Nebelschlussleuchte und/oder des Nebelscheinwerfers verwendet wird.

8. Verfahren gemäß einem der voranstehenden Patentansprüche 1 bis 7,
**dadurch gekennzeichnet, dass** als wetterrelevante Zustandsdaten (6) des Verkehrsmittels der gemessene Schlupf an Antriebsrädern verwendet wird.

9. Verfahren gemäß einem der voranstehenden Patentanspfüche 1 bis 8,
**dadurch gekennzeichnet, dass** als wetterrelevante Zustandsdaten (6) des Verkehrsmittels die Temperaturinformation eines Temperatursensors verwendet wird.

10. Verfahren gemäß einem der voranstehenden Patentansprüche 1 bis 9,
**dadurch gekennzeichnet, dass** zusätzlich Informationen (6) des Verkehrsmittels über die Geschwindigkeit und/oder den Schaltzustand und/oder den Lastzustand und/oder eine Abstandsmessung zum vorausfahrenden oder nachfolgenden Verkehrsmittel verwertet wird.

11. Verfahren gemäß einem der voranstehenden Patentansprüche 1 bis 10,
**dadurch gekennzeichnet, dass** das Verkehrsmittel ein Straßenfahrzeug, insbesondere PKW oder LKW, ist, als Wegekarte eine Straßenkarte und als Wegezustandskarte eine Straßenzustandskarte verwendet wird.

12. Verfahren gemäß einem der voranstehenden Patentansprüche 1 bis 10,
**dadurch gekennzeichnet, dass** das Verkehrsmittel ein Schienenfahrzeug ist und als Wegekarte eine Schienennetzkarte und als Wegezustandskarte eine Schienennetzzustandskarte verwendet wird.

13. Verfahren gemäß einem der voranstehenden Patentansprüche 1 bis 10,
**dadurch gekennzeichnet, dass** das Verkehrsmittel ein Wasserfahrzeug, insbesondere ein Binnen- oder Seeschiff, ist, wobei als Wegekarte eine Binnen- oder Seeschifffahrtskarte und als Wegezustandskarte eine Zustandskarte der Binnen- oder Seeschifffahrtswege verwendet wird.

14. Verfahren gemäß einem der voranstehenden Patentansprüche 1 bis 10,
**dadurch gekennzeichnet, dass** das Verkehrsmittel ein Luftfahrzeug, insbesondere ein Flugzeug, die Wegekarte eine Luftverkehrskarte und als Wegezustandskarte eine Luftverkehrsroutenkarte mit relevanten Zustandsinformationen verwendet wird.

15. Verfahren gemäß einem der voranstehenden Patentansprüche 1 bis 14,
**dadurch gekennzeichnet, dass** zusätzlich zu jeder Information auch eine Zeitinformation bezüglich der Ermittlung der übertragenen Informationen versendet wird.

16. Verfahren gemäß einem der voranstehenden Patentansprüche 1 bis 15,
**dadurch gekennzeichnet, dass** zur Ortsbestimmung des Verkehrsmittels Informationen bezüglich Funkzellen des Telekommunikationssystems, vorzugsweise in Verbindung mit weiteren im Fahrzeug vorliegenden Daten zu Geschwindigkeitsund Lenkzuständen oder Inertialsystemen und/oder des GPS (Global Positioning System) und/oder DGPS (Differential Global Positioning System) verwendet werden.

17. Verfahren gemäß dem voranstehenden Patentanspruch 16,
**dadurch gekennzeichnet, dass** Ortskorrekturparameter bei der Ortsbestimmung durch DGPS, durch den mindestens einen Zentralrechner (5) über das Telekommunikationssystem an das Verkehrsmittel übertragen werden.

18. Verfahren gemäß einem der voranstehenden Patentansprüche 1 bis 17,
**dadurch gekennzeichnet, dass** zur Datenübertragung, zumindest vom Fahrzeug zum zentralen Rechner, das UMTS-Netz (UMTS = Universal Mobile Telekommunikation System) oder ein satellitengestütztes Telekommunikationssystem verwendet wird.

19. Verfahren gemäß einem der voranstehenden Patentansprüche 1 bis 18,
**dadurch gekennzeichnet, dass** von dem mindestens einen zentralen Rechner (5) die ermittelten Informationen (7) zumindest teilweise, und vorzugsweise ortsbezogen, an Verkehrsmittel (2) übertragen werden.

20. Verfahren gemäß dem voranstehenden Patentanspruch 19,
**dadurch gekennzeichnet, dass** der mindestens eine zentrale Rechner (5) mindestens einem Fahrzeug (1, 2) in Abhängigkeit von der aktuellen Position und /oder vom Fahrtweg und/oder einer berechneten Route und/oder vom Fahrtziel jeweils aktuelle Karten- und/oder Straßenzustands-Informationen, vorzugsweise über eine Telekommunikationsstrecke, zusendet.

21. Verfahren gemäß einem der voranstehenden Patentansprüche 1 bis 20 oder gemäß dem Oberbegriff des Patentanspruches 1,
**dadurch gekennzeichnet, dass** zur Positionsdefinition eines Verkehrsmittels Positionszellen verwendet werden, die sich lücken- und überlappungsfrei an benachbarte Positionszellen anschließen.

22. Verfahren gemäß dem voranstehenden Patentanspruch 21,
**dadurch gekennzeichnet, dass** die Positionszellen Wabenform, vorzugsweise Sechseckform, vorzugsweise die Form von gleichseitigen Sechsecken, aufweisen.

23. Verfahren gemäß einem der voranstehenden Patentansprüche 1 bis 22 oder gemäß dem Oberbegriff des Patentanspruches 1,
**dadurch gekennzeichnet, dass** mindestens ein Verkehrsmittel wartungsbezogene Zustandsinformationen über im Verkehrsmittel befindliche Bauteile übermittelt.

24. Verfahren gemäß dem voranstehenden Patentanspruch 23,
**dadurch gekennzeichnet, dass** die Zustandsinformationen an eine Service-Station (10) übermittelt werden.

25. Verfahren gemäß dem voranstehenden Patentanspruch 24,
**dadurch gekennzeichnet, dass** die Service-Station (10) ein Hersteller des Verkehrsmittels oder ein zuvor benannter Wartungsbetrieb oder ein Pannendienst ist.

26. Verfahren gemäß einem der voranstehenden Patentansprüche 1 bis 25,
**dadurch gekennzeichnet, dass** der mindestens eine zentrale Rechner (5) bei Auftreten vorbestimmter, vorzugsweise ortsbezogener, Umstände Einfluss auf das Verkehrsmittel ausübt, vorzugsweise den Geschwindigkeitsvektor aktiv verändert.

27. Verfahren gemäß dem voranstehenden Patentanspruch 26,
**dadurch gekennzeichnet, dass** der zentrale Rechner (5) ein Eindringen des Verkehrsmittel in gesperrte Verkehrsräume verhindert.

28. Verfahren gemäß dem voranstehenden Patentanspruch 27,
**dadurch gekennzeichnet, dass** als gesperrte Verkehrsräume Verkehrsstraßen in falscher Fahrtrichtung, gesperrte Schienenwege, unerlaubte Lufträume oder unerlaubte See oder Schifffahrtszonen sind.

29. Verfahren gemäß einem der voranstehenden Patentansprüche 1 bis 28 oder gemäß dem Oberbegriff des Patentanspruches 1,
**dadurch gekennzeichnet, dass** die Aktualisierung der Wege- und/oder Wegezustandskarte mit einer Karte ohne ursprüngliche Einträge beginnt und ausschließlich auf Basis der empfangenen Bewegungs- und Zustandsinformationen der Verkehrsmittel die Karte in digitalisierter Form aufbaut.

30. Verfahren gemäß dem voranstehenden Patentanspruch 29,
**dadurch gekennzeichnet, dass** zum Verkehrsmittel übertragene Wege- und/oder Wegezustands-Information mittelbar oder unmittelbar eine geldwerte Belastung eines Kontos des Fahrers und/oder Halters und/oder Besitzers des Verkehrsmittels bewirkt.

31. Verfahren gemäß dem voranstehenden Patentanspruch 30,
**dadurch gekennzeichnet, dass** die Kontendaten durch die Kenndaten einer Telekommunikationszugangskarte mittelbar oder unmittelbar übertragen werden.

32. Verfahren gemäß dem voranstehenden Patentanspruch 31,
**dadurch gekennzeichnet, dass** eine Abbuchung durch das Einlesen einer Geldkarte bewirkt wird.

33. Verkehrs- und Wegezustandsinformationssystem mit mindestens einem Rechner zur Programm- und Datenspeicherung, der über ein Telekommunikationsnetz mit einer Vielzahl von aktiv am Verkehr beteiligten Verkehrsmitteln verbunden ist,
**dadurch gekennzeichnet, dass** es Mittel, vorzugsweise Programm-Mittel, aufweist, welche das Verfahren gemäß einem der vorstehenden Verfahrensansprüche 1 bis 32 ausführen.
